(19) Europäisches Patentamt
European Patent Office
Office européen des brevets

(11) **EP 1 477 771 A2**

(12) **EUROPÄISCHE PATENTANMELDUNG**

(43) Veröffentlichungstag:
**17.11.2004 Patentblatt 2004/47**

(51) Int Cl.7: **G01D 5/12**, G01B 7/004,
G01B 7/02, G01B 7/30

(21) Anmeldenummer: **04005512.1**

(22) Anmeldetag: **09.03.2004**

(84) Benannte Vertragsstaaten:
**AT BE BG CH CY CZ DE DK EE ES FI FR GB GR
HU IE IT LI LU MC NL PL PT RO SE SI SK TR**
Benannte Erstreckungsstaaten:
**AL LT LV MK**

(30) Priorität: **15.05.2003 DE 10322130**

(71) Anmelder: **Rodi, Anton**
**69181 Leimen (DE)**

(72) Erfinder: **Rodi, Anton**
**69181 Leimen (DE)**

(54) **Phasenabgleich für Winkel- und Wegmessgeber**

(57)     Es werden Winkel- und Wegmessgeber mit inkrementellen Teilungsabschnitten der Maßstäbe beschrieben, die in der Sensoranordnung in Messrichtung versetzte Sensoren zur Erzeugung von wegbezogenen Signalen aufweisen.

Durch den Versatz der Sensoren-Achse zur Messachse wird die Phasenabweichung zwischen Maßstabsteilung und Sensorabstand beseitigt und eine rationelle Fertigung der Messgeberkomponenten ermöglicht.

Figur 1

EP 1 477 771 A2

**Beschreibung**

Für Winkel- und Wegmessgeber werden derzeit optische, magnetische und andere physikalischen Messprinzipien verwendet und mit überwiegend inkrementellen Maßstabsprinzipien ausgeführt. Um die Auflösung von den Messsystemen zu erhöhen, ist man dazu übergegangen, die inkrementelle Teilstrecken im Zusammenwirken mit einem Sensor stets so zu gestalten, dass ein stetiges Analogsignal proportional zur Wegstrecke entsteht und dessen Amplitude dann feiner über AD-Wandler oder sogenannte Interpolatoren aufzulösen. Bevorzugt werden sinusförmige Amplituden erzeugt, die besonders einfach in einer Sensoranordnung mit z. B. zwei in Messrichtung versetzt angeordneten Sensoren die Bewegungsrichtung ermitteln lassen. Darüber hinaus können damit auch die Absolutpositionen innerhalb der Teilstrecke über trigonometrische Funktionszusammenhänge, z. B. Arkus-Tangensbildung, ermittelt werden. Für diese Absolutwerterfassung ist es aber wichtig, die Sensoren zu der Erzeugung von zwei Signalfolgen möglichst präzise in Abstände auf ½ ± ¼ der Teilungsperiode innerhalb einer oder mehrerer Magnet-Teilperioden anzuordnen, um Sin-/Cos-Signale zu erhalten. Die so um 90° (bzw. 270°) verschobenen Signalfolgen lassen sich besonders einfach mit gängigen Verfahren auswerten.

Die zunehmend feinere Auflösung und gewünschte höhere Genauigkeit von solchen Winkel- und Wegmessgebern stellt jedoch hohe Anforderungen an die präzise Einhaltung von Teilabständen bei den Maßstäben. Dabei ist es fertigungstechnisch wesentlich einfacher gleiche Teilstrecken zu erzeugen, als das absolute Teilstreckenmaß vorbestimmt im Produktionsprozess genau einzuhalten. Dies ist aber ebesno wichtig, da die Sensoren ebenfalls auf das vorbestimmte Absolutmaß angeordnet und im Messsystem dann exakt übereinstimmen müssen. Diese Anforderung verursacht erhebliche Abstimmungs- sowie Fertigungskosten und führt bei fehlender Übereinstimmung zu unerwünschten Phasenfehler. Die Phasenabweichung zu den Signalfolgen von 90° führt nicht nur zu Auswertproblemen, auch gehen die Fehler direkt in die Linearitäts- bzw. Absolutwertabweichung der Messwerte ein. Die Erfindung soll dem Abhilfe schaffen, um mit möglichst geringen Abstimmungs- und Fertigungskosten die gewünschte Präzision in der Messwertaufbereitung über die exakt einstellbare Phasenbeziehung zu erhalten.

Nachfolgend werden bei den Figurenbeschreibungen beispielhaft an einem magnetischen Messprinzip die weiteren Erläuterungen gegeben sowie die Erfindung beschrieben, obwohl die geschilderten Zusammenhänge ganz unabhängig von physikalischen Messprinzipien sind und diese ausdrücklich mit in das Schutzbegehren einbezieht.

Die Figuren 1 bis 5 zeigen:

Figur 1: Magnetischer Maßstab mit Messgeber (Seitenansicht)

Figur 2: Magnetischer Maßstab mit Messgeber (Draufsicht)

Figur 3: Sensoren auf einem Trägersubstrat (Seitenansicht)

Figur 4: Sensoren auf einem Trägersubstrat (Draufsicht)

Figur 5: Sensoranordnungen im Bezugssystem

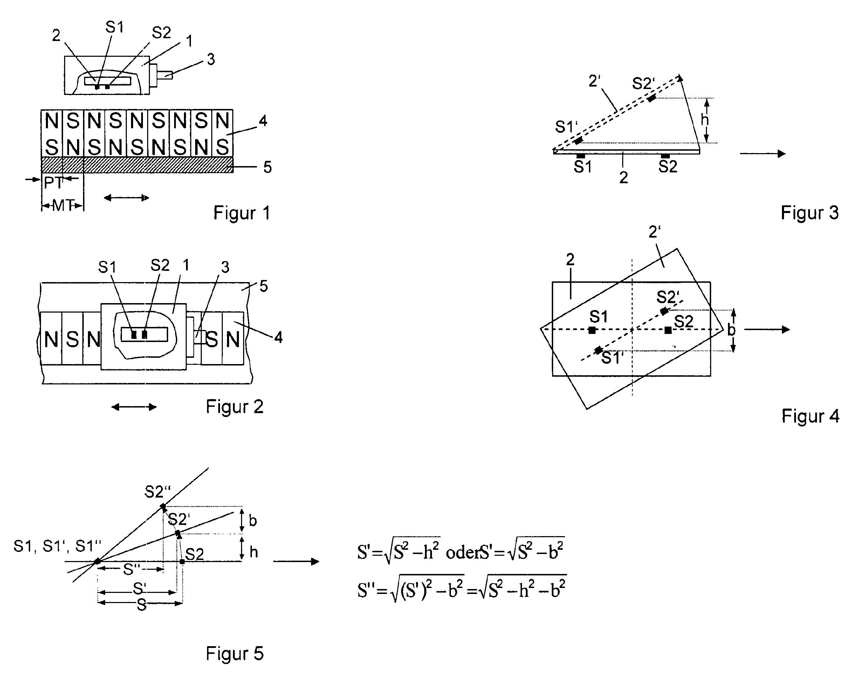

In Figur 1 wird der Maßstab mit sich abwechselnden Magnet-Polteilungen N/S bzw. S/N gezeigt (4), die auf einem magnetisch leitfähigen Trägerband (5) angeordnet und z. B. über Klebeverbindung befestigt sind. Die Magnetfelder verlaufen auf praktisch der gesamten Maßstabsbreite symmetrisch vom N- zum S-Pol. Mit dem Höhenabstand von der Maßstabsoberfläche nimmt die magnetische Induktion ab. Als vereinfachte Faustregel für magnetische Messsysteme gilt, dass der optimale Arbeitspunkt zur Messerfassung bei einem Höhenabstand von ca. ½ MT liegt. In diesem Arbeitspunkt erzielt man auch in ca. ± 25% davon noch sehr ausgeprägte Sin-Verläufe der Induktion in Amplitude und Phasenlage bezogen auf die Messrichtung innerhalb der winkel- bzw. wegbezogenen Magnetteilung. Darüber befindet sich der Messgeber (1) mit Kabelausgang (3), der die Signalerfassung und Messwertaufbereitung umfasst und an eine externe Steuerung (nicht gezeichnet) Messwerte übermittelt bzw. mit dieser im Datenaustausch steht und von dort z. B. auch die Netzversorgung erhält. Der Messdatenaustausch kann über unterschiedlichste Leitungen (Kupfer, Lichtleiter usw.) und auch kabellos z. B. über Funk erfolgen. Im Schnittbild sind zwei Sensoren S1, S2 in Abstand auf einem Trägersubstrat (2) parallel zum Maßstab in der Messachse der Messrichtung gezeigt. Die Sensoren können auf beliebig magnetempfindlichen Wirkungsprinzipien z. B. Hall- oder Magnetoresistiven-Effekt usw. beruhen. Nachfolgend werden Hall-Sensoren beispielhaft herangezogen und deren Phasenbeziehung beschrieben. Da die Hall-Sensoren die magnetische Induktion B vorzeichenrichtig erfassen, ergeben sich über zwei Polteilungen (PT) N/S und S/N die magnetische Teilung (MT) für einen 360°-Sinus-Signalverlauf. Die Phasenbedingung für die zwei Sensoren von 90° umfasst somit den Abstand von $1/_4$ der Magnetteilung MT (zwei Polteilungen) bzw. ½ der Polteilung PT (N/S bzw. S/N). Geht man dabei von einer Polteilung PT von 1 mm aus und setzt eine Interpolation von 11 Bit (2000-fach) voraus, so wird eine Wegauflösung innerhalb der Magnetteilung MT von 1 µm erzielt. Dies stellt bereits eine sehr hohe Anforderung an die reproduzierbare Herstellung solcher Magnetpolteilungen bei den Maßstäben voraus, die sequentiell mit wechselnder Polarität N/S bzw. S/N magnetisiert werden. Das magnetisierbare Grundmaterial besteht überwiegend aus Kunststoff (Polymere) mit eingebettetem Barium- oder Strontiumferritten, das ca. den 30 ... 50 fachen Wärmeausdehnungskoeffizienten von Stahl mit 12 µm/m °K hat. Daher ist es zweckmäßig, das bänderförmige Grundmaterial vorher auf das gewünschte Trägermaterial aufzubringen und z. B. mittels Klebeverbindung zu befestigen, bevor es präzise magnetisiert wird. Nicht nur die unterschiedlich gewünschten Träger- sowie auch magnetisierbaren Grundmaterialien in verschieden dicken Ausführungen machen den abgestimmten Produktionsprozess in möglichst konstanter Temperaturumgebung schwierig, auch die Wahl der Klebeverbindung (harter bzw. weicher Kleber, Klebstelle usw.) ist schließlich maßgebend für Genauigkeit sowie Reproduzierbarkeit der Magnetteilungen im späteren Messeinsatz. Zudem kommt ebenfalls noch der auf die Maßstabsteilung abgestimmte Abstand der zwei Sensoren S1, S2, der genau auf die Magnetteilung bezogen sein muss und in der Toleranz kleiner als die z. B. gewünschte Messauflösung von 1 µm sein soll. Es wird ersichtlich, dass der Produktionsprozess sowohl bei der Messanordnung der Sensoren als auch bei den Maßstäben sich primär auf den reproduzierbar gleichen Teilungsabstand konzentrieren muss, um die Anforderungen an die kostengünstig fertigbare Präzision zu erfüllen. Es bleibt daher die Aufgabe, die Abweichungen in den Absolutmaßen der Magnetteilungsstrecken und den Sensorabständen zu bewältigen, wenn man ein Messsystem mit der Genauigkeit in der Größenordnung der Auflösung erzielen will. Präzisionsmaschinen, bei denen solche Messsysteme eingesetzt werden, stellen zudem die Genauigkeitsforderungen für deren mittleren Betriebseinsatz. Die Temperaturen in solchen Betriebseinsätzen sind z. B. bei Offsetdruckmaschinen 10 ... 15 °K höher als die Raumtemperatur und machen die Anpassung im System bezüglich der Phasenabstimmung zwischen geklebten Magnetbandmaterial und Sensoranordnung noch problematischer. Erschwert wird die Abstimmung zusätzlich durch die Integration der Sensoranordnungen in Halbleiter auf einem Chip mit Silizium als Trägersubstrat. Die Präzision der Sensorabstände ist weit unterhalb eines Mikrometers gewährleistet, aber die Abstimmung der Phasenlage ist jetzt allein auf den Produktionsprozess in der Maßstabsfertigung erschwerend verlagert. Es wird offensichtlich, dass die Absolutabweichung der Phasenbeziehung zwischen Maßstab und Sensor den Abstimmungs- und Fertigungsprozess verteuert und zu bleibenden Messabweichungen in den Linearitäts- sowie Absolutmesswerten führt. Im oben aufgeführten Beispiel wird verständlich, dass die Herstellung reproduzierbarerer inkrementeller Teilungen z. B. innerhalb 1 µm untereinander erzielbar sind, aber die Absolutabweichung durch die getrennten Fertigungsprozesse von Maßstab und Sensoranordnung sowie im Betriebseinsatz der Messanordnung zu höheren Phasenabweichungen um ca. eine Größenordnung (bis zu 10 µm) führt. Dies ist aber unerwünscht und führt zu kostspielig hohen Aufwendungen und Maßnahmen im Vorfeld und während der Komponentenherstellung des Messsystems.

Mit der erfindungsgemäßen Ausgestaltung der Sensoranordnung wird der Nachteil der Phasenabweichung zwischen Maßstabsteilung und wirksamen Sensorabstand weitestgehend beseitigt und die rationelle Messgeber- als auch Maßstabsfestigung ermöglicht.

In Figur 2 wird der gleiche Messgeber (1) wie in Figur 1 verwendet, in Messrichtung angeordnet und in Draufsicht zum Maßstab (4) auf dem Maßstabsträger (5) gezeigt. Das Schnittbild zeigt in Draufsicht die gleichen Sensoren S1, S2 wie in Figur 1 sowie in der Messachse der Messrichtung in der Phasenbeziehung zum Maßstab um ¼ MT bzw. ½ PT versetzt. Die Magnetfelder verlaufen in Messrichtung symmetrisch auf der Breite des Maßstabs von N nach S, so dass die Sensorachse auch parallel versetzt zur Mittelachse des Maßstabes sein kann. Im Gegensatz zur Entfernung der Sensorachse S1, S2 vom Maßstab in Figur 1, bei der die magnetische Induktion sich ändert, bleibt die magnetische Induktion bei gewählter Entfernung der Sensorachse auf der Breite der Maßstabsebene praktisch gleich.

Die Relativverstellung zwischen Maßstab (4, 5) und Messgeber (1) erstreckt sich im Geschwindigkeitsbereich von 0 bis ca. 10 m/sec, so dass bei feineren Auflösungen sehr hohe Anforderungen an die Messsignalverarbeitung gestellt werden und Grenzfrequenzen der Digitallogik von derzeit 30 MHz bis 50 MHz erreichen. Bei solchen Messgeschwindigkeiten werden möglichst gleichförmige Messsignale bezüglich Amplitude und Phase gewünscht, so dass der Messgeber zum Maßstab hin im Höhen- und Seitenversatz präzise sich über die ganze Messlänge bewegen muss. Noch anspruchsvoller sind die Anforderungen von Drehgebern, bei denen der Abstand des Messgebers zur Messscheibe noch zusätzlich in die wirksame Magnetteilung MT und damit der Phasenbeziehung der Sensoren S1, S2 eingeht. Auch muss der Umfang der Maßscheibe erschwerend genau mit den ganzzahligen Magnetteilungen übereinstimmen. Aus all dem wird ersichtlich, wie wichtig eine nachträgliche Anpassung bzw. Justierung der Phasenbeziehung der Sensorsignale S1, S2 ist, wie sie in der erfindungsgemäßen Ausführung gewährleistet wird.

In Figur 3 wird vergrößert die Sensoranordnung S1, S2 auf dem Trägersubstrat in Seitenansicht gezeigt. Das Trägersubstrat für die Sensoren kann z. B. eine Leiterplatte, eine Folie, eine Keramikplatte oder aus Silizium-Chip usw. sein. Zunehmend werden z. B. die Hall-Sensoren mit Signal- und der Messwertauswertung eingebettet auf einem Silizium-Chip als integrierte Schaltung ausgeführt. Auch können die Sensoren S1, S2 über mehrere Magnetteilungen versetzt und mehrfach angeordnet zur Bildung von den gewünschten mindestens zwei Signalfolgen sein. Allen Sensoren ist gemeinsam, dass die Sensoranordnung in einer Sensorachse angeordnet und in wirksamer Beziehung zu der von dem Maßstab durch die Magnetteilungen gebildete Messachse in Messrichtung steht. In Figur 3 wird in paralleler Ausgangslage in Abstand zu der Maßstabsoberfläche die durch die Sensoren S1 bis S2 gebildete Sensorachse auf dem Trägersubstrat (2) und damit in Übereinstimmung zur Messachse die Messrichtung (Bewegungspfeil) gezeigt. Der Abstand S1 zu S2 muss genau in Beziehung zu der Magnetteilung des Maßstabes bzw. Maßscheibe stehen. Innerhalb einer Magnetteilung MT muss z. B. für Hallsensoren der Sensorabstand genau MT (½ ± ¼) sein. Bei den meisten MR-Sensoren ist der Abstand PT (½ ± ¼) nur halb so groß, da die Sinusschwingung durch das Quadrat der magnetischen Induktion gebildet wird. Wenn die Sensoranordnung sich über mehrere n ganze Magnetteilungen MT bzw. Polteilungen PT erstrecken, so ergeben sich die vorgenannten Sensorabstände durch MT (n + ½ ± ¼) bzw. PT (n + ½ ± ¼). Generell ausgedrückt ergibt sich der Sensorabstand ganz allgemein durch die inkrementelle Messteilung T des Maßstabs in der Messanordnung mit T (n + ½ ± ¼). Wenn nun die Maßstabsteilung T kleiner als die bei der Sensoranordnung ursprünglich gewählte bzw. realisierte ausfällt, so lassen sich nach der Erfindung die Mängel beseitigen. Dies trifft ebenso zu, wenn die Sensoranordnung entsprechend mit größerem Abstand der Sensoren S1, S2 für die inkrementellen Teilungen im Vergleich zum Maßstab bzw. Maßscheibe ausgeführt werden. Die Figur 3 zeigt hier eine mögliche Abhilfe, in dem die Sensorachse mit dem Trägersubstrat (2') um ein Höhenmaß h als Versatz zur Messachse in Messrichtung geneigt wird. Der wirksame Abstand der Sensoranordnung mit den Sensoren S1', S2' ergibt sich durch die senkrechte Projektion auf die Messachse (Pfeil). Der wirksame Abstand der Sensoren S1' zu S2' in der Messanordnung ist somit bezogen af die Messachse in Messrichtung kleiner als der tatsächlich auf dem Trägersubstrat 2' realisierte Abstand. Bei Magnetmaßstäben lässt sich der Versatz durch Neigung in der Höhe h bis ca. ± 25% des optimalen Höhenabstandes von ca. einer Polteilung anpassen. Damit würde bei einer angenommenen Polteilung von 1 mm die Neigung h der Sensorachse von insgesamt bis ca. 0,5 mm zugelassen, was ohne Beeinträchtigung der Funktion der Messanordnung eine bis ca. 15 % reduzierte Anpassung der inkrementellen Messteilung T zwischen Maßstab und Messgeber bedeutet.

Bei der Figur 4 wird das Trägersubstrat 2 mit den Sensoren S1, S2 in der Draufsicht gezeigt, wobei die Sensorachse S1 zu S2 mit der Messachse in Messrichtung (Pfeil) zusammenfällt. Der wirksame Abstand der Sensoren S1, S2 ist somit identisch mit dem auf dem Trägersubstrat. Dies trifft auch in Figur 3 zu, so lange die Sensorachse mit der Messachse in Messrichtung zusammenfällt.

In Figur 4 wird ein anderer möglicher Versatz der Sensorachse zur Messachse gezeigt, in dem das Trägersubstrat mit der Sensoranordnung und damit Sensorachse zur Messachse in Messrichtung um das Maß b dreht. In der Zeichnung wird in dieser Lage das Trägersubstrat 2' mit der durch die Sensoren S1' und S2' gebildeten Sensorachse gezeigt. Da die Maßstäbe relativ breit zur benötigten Messspur ausgeführt sind, was auf die Mindestklebefläche sowie z. B. kleine Hallelemente mit kleiner 200 µm x 200 µm Sensorfläche zurückzuführen ist, wird das Drehen der Sensorachse zumindest für die Sensoranordnungen mit Hallsensoren zu bevorzugen sein. Geht man von einer Polteilung PT von 1 mm und einer Maßstabsbreite von z. B. größer 3 mm aus, so wird offensichtlich, dass die Drehung der Sensorachse mit Trägersubstrat zur Messachse in Messrichtung bis zu 90° möglich wird und der projizierte wirksame Sensorabstand in der Messanordnung von praktisch 0 bis zum Abstand T (n + ½ ± ¼) stufenlos einstellbar wird. Zusätzlich ist durch drehen der Sensorachse in der Ebene parallel zur Maßstabsoberfläche die homogene und auf den Winkel bzw. Weg bezogene unveränderliche magnetische Induktion gewährleistet, was die Messauswertung begünstigt.

In der Figur 5 werden die Zusammenhänge bei dem Versatz durch Neigen und Drehen der Sensorachse zur Messachse in Messrichtung sowie die Projektion der wirksamen Sensorabstände aufgezeigt, auch in Kombination beider Verstellungen. In der Ausgangslage fällt die Sensorachse S1 zu S2 mit der Messachse in Messrichtung zusammen. Der wirksame Sensorabstand S ist identisch mit dem Abstand der Sensoren. Die Sensorachse wird im Punkt des Sensors S1 um h geneigt, so dass S1 mit S1' zusammenfällt und S2' den projizierten Abstand $S' = \sqrt{S^2 - h^2}$ bildet. Dreht man nun die Sensorachse aus dieser Ausgangslage mit dem projizierten Abstand S', so fällt S1" mit S1' (S1) zusammen und S2" projiziert den wirksamen Abstand $S'' = \sqrt{S^2 - h^2 - b^2}$ ergibt.

Mit dem erfinderischen Versatz der Sensorachse zur Messachse ergibt sich eine breite Anpassung von unterschiedlichen inkrementellen Messteilungen, um die präzisen Signalfolgen von Sin-/Cos-Signalen für höchstaufgelöste Winkel- und Wegmessgeber zu erhalten. Die Anpassungen z. B. lassen sich im Hersteller-Werk bei der Messgeberfertigung, Inbetriebnahme in Feldeinsatz, Probelauf beim Kunden und Servicefällen vornehmen, wenn entsprechende konstruktive Vorkehrungen und Ausführungen zum Versatz der Sensorachse zur Messachse im Messrichtung bei den Messgeberausführungen getroffen werden. Es kann der Messgeber (1) selbst in seiner Befestigung zur Messachse geneigt und oder gedreht werden, als auch das Trägersubstrat 2 mit den Sensoranordnungen mit mindestens zwei Sensoren S1, S2 direkt oder indirekt im oder zum Messgeber geneigt und oder gedreht werden.

Mit den erfinderischen Anpassungen werden nicht nur die Abstimmungen bei der Herstellung der Messgeber- und Maßstabskomponenten bezüglich inkrementeller Teilung kostengünstig vereinfacht, es werden auch Adaptionen an unterschiedliche Einbau- und Betriebsbedingungen zur Erreichung der höchstmöglichen Präzision von Winkel- und Wegmesssystemen ermöglicht. Darüber hinaus kam besonders vorteilhaft ein einheitlicher Messgeber mit einer festen Sensoranordnung und Sensorabständen für eine Vielzahl von Maßstabsausführungen mit kleiner/gleichen inkrementellen Teilungen (MT, PT) mit T (n + ½ ± ¼) eingesetzt werden. Auch ergänzt die erfinderische Anpassung vorteilhaft die sonst noch dynamisch durch die Signal- und Messwertaufbereitung elektronisch vorzunehmenden Phasenkompensation der Signalfolgen, die sich bedingt durch Toleranzen bei der Fertigung von inkrementellen Teilungen untereinander, z. B. durch Magnetisierung, beim Maßstab oder im Zusammenwirken vom Maßstab/ Maßscheibe und Messgeber im Betriebseinsatz ergeben.

Das erfinderische Verfahren und die Ausführungen zum Versatz der Sensorachse zur Messachse sind auch auf andere physikalische Messprinzipen wie z. B. optische, induktive, kapazitive usw. übertragbar und sollen ausdrücklich mit zu den erläuterten magnetischen Winkel- und Wegmessgeber einbezogen werden.

**Patentansprüche**

1. Winkel- und Wegmessgeber, die mit inkrementellen Teilungsabschnitten der Maßstäbe und mindestens mit einer Sensoranordnung mit mindestens zwei in Messrichtung versetzten Sensoren zur Bereitstellung wegbezogener Signale innerhalb der Teilungsstrecke versehen sind, **dadurch gekennzeichnet, dass** die auf die Messachse in Messrichtung wirksamen Abstände der Sensoranordnung mit mindestens zwei Sensoren durch Versatz der Sensorachse zur Messachse verändert werden.

2. nach 1.) d. g., dass die Sensorachse zur Messachse gedreht wird.

3. nach 1.) d. g., dass die Sensorachse zur Messachse geneigt wird.

4. nach 1.) d. g., dass der Messgeber mit der Sensoranordnung zur Messrichtung gedreht und/oder geneigt wird.

5. nach 1.) d. g., dass die Sensoranordnung innerhalb des Messgebers gedreht und/oder geneigt wird.

6. nach 1.) d. g., dass der Abstand von mindestens zwei Sensoren auf einem Trägersubstrat größer/ gleich T (n + ½ ± ¼) ist, wobei T die inkrementelle Messteilung und n die ganze Anzahl der von den Sensoren wirksam überdeckten Maßstabsteilungen in der Messanordnung bedeutet.

7. Verfahren für Winkel- und Wegmessgeber, die inkrementelle Maßstabsausführungen mit in Messrichtung versetzten Sensoren auswerten, **dadurch gekennzeichnet, dass** die Sensorachse zur Messachse wirksam in Versatz gebracht wird.

Figur 1

Figur 3

Figur 2

Figur 4

$$S'=\sqrt{S^2-h^2} \quad \text{oder} \quad S'=\sqrt{S^2-b^2}$$

$$S''=\sqrt{(S')^2-b^2}=\sqrt{S^2-h^2-b^2}$$

Figur 5

EP 1 477 771 A2